# EUROPÄISCHE PATENTSCHRIFT

(11) **EP 2 666 750 B1**
(45) Veröffentlichungstag und Bekanntmachung des Hinweises auf die Patenterteilung: **05.07.2017**
(21) Anmeldenummer: 13167980.5
(22) Anmeldetag: 16.05.2013
(51) Int. Cl.: C01B 33/02, B65B 17/00, B65B 23/00, B65D 75/00, B65D 77/00

(54) **Polykristallines Silicium**
Polycrystalline silicon
Silicium polycristallin

(30) Priorität: 21.05.2012 DE 102012208473
(43) Veröffentlichungstag der Anmeldung: 27.11.2013
(73) Patentinhaber: Wacker Chemie AG, 81737 München (DE)
(72) Erfinder: Vietz, Matthias, 5230 Mattighofen (AT); Pech, Dr. Reiner, 84524 Neuötting (DE)
(74) Vertreter: Potten, Holger

(56) Entgegenhaltungen:
- EP-A1- 1 842 595
- EP-A2- 2 030 905
- DE-A1- 3 221 436
- DE-A1-102007 027 110

## Beschreibung

Die Erfindung betrifft polykristallines Silicium.

Polykristallines Silicium, im Folgenden als Polysilicium bezeichnet, dient u. a. als Ausgangsmaterial für die Herstellung von elektronischen Bauteilen und Solarzellen.

Es wird durch thermische Zersetzung eines siliciumhaltigen Gases oder eines siliciumhaltigen Gasgemisches gewonnen. Dieser Prozess wird als Abscheidung aus der Dampfphase (CVD, chemical vapor deposition) bezeichnet.

In großem Maßstab wird dieser Prozess in so genannten Siemens-Reaktoren realisiert. Das Polysilicium fällt dabei in Form von Stäben an. Die Polysiliciumstäbe werden in der Regel mittels händischer Verfahren zerkleinert.

Es sind eine Reihe maschineller Verfahren bekannt, in denen händisch vorgebrochener Polysilicium-Grobbruch unter Einsatz üblicher Brecher weiter zerkleinert wird. Mechanische Brechverfahren sind beispielsweise in US 8021483 B2 beschrieben.

US 8074905 offenbart eine Vorrichtung umfassend eine Aufgabeeinrichtung für einen Polysilicium-Grobbruch in eine Brecheranlage, die Brecheranlage und eine Sortieranlage zum Klassieren des Polysilicium-Bruchs, dadurch gekennzeichnet, dass die Brechanlage mit einer Steuerung versehen ist, die eine variable Einstellung mindestens eines Brechparameters in der Brecheranlage und/oder mindestens eines Sortierparameters in der Sortieranlage ermöglicht.

Für Anwendungen in der Halbleiter- und Solarindustrie ist ein möglichst wenig kontaminierter Polysiliciumbruch erwünscht. Um dies zu bewerkstelligen, kommen auch verschiedene Reinigungsverfahren zum Einsatz.

US 2010/0001106 A1 beschreibt ein Verfahren zur Herstellung von hochreinem klassierten Polysilicium-Bruch, bei dem ein Polysilicium aus dem Siemens-Verfahren mittels einer Vorrichtung umfassend Zerkleinerungswerkzeuge und einer Siebvorrichtung zerkleinert und klassiert wird und der so erhaltene PolysiliciumBruch mittels eines Reinigungsbades gereinigt wird, dadurch gekennzeichnet, dass die Zerkleinerungswerkzeuge und die Siebvorrichtung durchgängig eine mit dem Polysilicium in Kontakt kommende Oberfläche aus einem Werkstoff besitzen, welches den Polysilicium-Bruch nur mit solchen Fremdpartikeln verunreinigt, welche anschließend gezielt durch das Reinigungsbad entfernt werden.

Auch an den Bruchstücken anhaftender Siliciumstaub wird als Kontamination angesehen, da er die Ausbeute beim Kristallziehen reduziert.

Aus US 2012/0052297 A1 ist ein Verfahren zur Herstellung von polykristallinem Silicium bekannt, umfassend Brechen von an Dünnstäben in einem Siemensreaktor abgeschiedenem polykristallinem Silicium in Bruchstücke, Klassieren der Bruchstücke in Größenklassen von etwa 0,5 mm bis grösser als 45 mm und Behandlung der Bruchstücke mittels Druckluft oder Trockeneis, um Siliciumstaub von den Bruchstücken zu entfernen, wobei keine chemische Nassreinigung erfolgt.

Das polykristalline Silicium muss jedoch nach den Zerkleinerungsschritten und der gegebenenfalls durchgeführten Reinigung-oder Entstaubung verpackt werden, bevor es zum Kunden transportiert wird.

Demzufolge ist beim Verpacken darauf zu achten, dass diese möglichst kontaminationsarm erfolgt.

Üblicherweise wird Polysiliciumbruch für die Elektronikindustrie in 5 kg Beuteln mit einer Gewichtstoleranz von +/- max. 50 g verpackt. Für die Solarindustrie ist Polysiliciumbruch in Beuteln mit einer Einwaage von 10 kg und einer Gewichtstoleranz von +/- max. 100 g üblich.

Schlauchbeutelmaschinen, die zur Verpackung von Siliciumbruch prinzipiell geeignet sind, sind kommerziell erhältlich. Eine entsprechende Verpackungsmaschine ist beispielsweise in DE 36 40 520 A1 beschrieben.

Bei Polysiliciumbruch handelt es sich aber um ein scharfkantiges, nicht rieselfähiges Schüttgut mit einem Gewicht der einzelnen Siliciumbruchstücke von bis zu 2500 g. Daher ist bei der Verpackung darauf zu achten, dass das Material die üblichen Kunststoffbeutel beim Befüllen nicht durchstößt oder im schlimmsten Fall sogar vollständig zerstört.

Um dies zu verhindern, sind die kommerziellen Verpackungsmaschinen zum Zwecke der Verpackung von Polysilicium in geeigneter Weise zu modifizieren.

Aus US 7013620 B2 ist eine Vorrichtung zum kostengünstigen vollautomatischen Transportieren, Abwägen, Portionieren, Einfüllen und Verpacken eines hochreinen Polysiliciumbruchs bekannt, umfassend eine Förderrinne für den Polysiliciumbruch, eine Wägevorrichtung für den Polysiliciumbruch, welche mit einem Trichter verbunden ist, Ablenkbleche aus Silicium, eine Abfüllvorrichtung, welche aus einer hochreinen Kunststofffolie einen Kunststoffbeutel formt, umfassend einen Deionisierer, der eine statische Aufladung und damit eine Partikelverunreinigung der Kunststofffolie verhindert, eine Verschweißvorrichtung für den mit Polysiliciumbruch gefüllten Kunststoffbeutel, eine oberhalb von Förderrinne, Wägevorrichtung, Abfüllvorrichtung und Verschweißvorrichtung angebrachte Flowbox, die eine Partikelverunreinigung des Polysiliciumbruchs verhindert, ein Förderband mit einem magnetisch induktiven Detektor für den verschweißten mit Polysiliciumbruch gefüllten Kunststoffbeutel, wobei alle Bauteile, die mit dem Polysiliciumbruch in Kontakt kommen, mit Silicium armiert oder mit einem hochverschleißfestem Kunststoff verkleidet sind.

Es hat sich gezeigt, dass bei solchen Vorrichtungen oftmals ein Verklemmen der Siliciumbruchstücke in der Abfüllvorrichtung auftritt. Dies ist nachteilig, da es dadurch zu erhöhten Stillstandszeiten der Maschine kommt.
Auch treten Durchstoßungen des Kunststoffbeutels auf, was ebenfalls zu einem Stillstand der Anlage und zu Kontamination des Siliciums führt.

Außerdem hat sich gezeigt, dass während des Verpackens von Bruchstücken einer bestimmten Größenklasse, z.B. Bruchgrößen von 20 bis 60 mm, auch unerwünschte kleinere Siliciumpartikel oder Bruchstücke entstehen. Der Anteil solcher unerwünschter Partikel beträgt für solche Bruchgrößen 17000-23000 ppmw.

Nachfolgend sollen alle Bruchstücke oder Partikel aus Silicium, die eine solche Größe aufweisen, dass sie sich mittels eines Maschensiebs mit quadratischen Maschen einer Größe von 8mm x 8mm abtrennen lassen, als Feinanteil bezeichnet werden. Der Feinanteil ist beim Kunden unerwünscht, da er die Kundenprozesse negativ beeinflusst. Falls der Feinanteil vom Kunden z.B. durch Sieben abgetrennt wird, bedeutet das einen erhöhten Aufwand.

Neben der automatischen Verpackung von polykristallinem Silicium wie nach US 7013620 B2 kommt auch ein händisches Verpacken des polykristallinen Siliciums in Kunststoffbeutel in Frage. Durch ein händisches Verpacken kann der Feinanteil deutlich reduziert werden, für die o.g. Bruchgröße 20-60 mm von 17000 ppmw auf bis 1400 ppmw.

Allerdings bedeutet das händische Verpacken einen hohen Aufwand und erhöhte Personalkosten. Daher kommt ein händisches Verpacken aus wirtschaftlichen Gründen nicht in Frage. Zudem wäre es wünschenswert, den Feinanteil noch weiter zu reduzieren als durch händisches Verpacken realisierbar.

Daher bestand die Aufgabe der Erfindung darin, polykristallines Silicium automatisch zu verpacken, den dabei entstehenden Feinanteil auf ein äußerst niedriges Niveau zu reduzieren.

Die Aufgabe der Erfindung wird gelöst durch polykristallines Silicium, das in Form von Bruchstücken vorliegt und in Kunststoffbeutel mit mindestens 5 kg Einwaage verpackt ist, beinhaltend Bruchstücke einer Größe von 20 bis 200 mm, dadurch gekennzeichnet dass ein Feinanteil, nämlich ein Anteil aller Bruchstücke oder Partikel aus Silicium, die eine solche Größe aufweisen, dass sie sich mittels eines Maschensiebs mit quadratischen Maschen einer Größe von 8mm x 8mm abtrennen lassen, an polykristallinem Silicium im Kunststoffbeutel kleiner als 900 ppmw, bevorzugt kleiner als 300 ppmw, besonders bevorzugt kleiner als 10 ppmw beträgt.

Vorzugsweise umfasst jenes polykristalline Silicium Bruchstücke einer Größe von 45 bis 200 mm, wobei der Feinanteil an polykristallinem Silicium im Kunststoffbeutel kleiner als 600 ppmw, bevorzugt kleiner als 10 ppmw beträgt.

Vorzugsweise umfasst das polykristalline Silicium Bruchstücke einer Größe von 90 bis 200 mm, wobei der Feinanteil an polykristallinem Silicium im Kunststoffbeutel kleiner als 500 ppmw, bevorzugt kleiner als 10 ppmw beträgt.

Der Feinanteil an polykristallinem Silicium umfasst im Rahmen der Erfindung Partikel, die sich mittels eines Maschensiebs mit einer Maschenweite von 8 mm (quadratische Maschen) von den im Kunststoffbeutel enthaltenen Bruchstücken absieben lassen.
Die Quantifizierung des Feinanteils erfolgt gravimetrisch.

Polykristallines Silicium, das in Form von Bruchstücken vorliegt und in Kunststoffbeutel mit mindestens 5 kg Einwaage verpackt ist, beinhaltend zu mindestens 90 Gew.-% Bruchstücke einer Größe von 10 bis 40 mm, gekennzeichnet dadurch, dass Partikel von polykristallinem Silicium mit einer Größe von weniger als 8,3 mm, vorzugsweise mit einer Größe von weniger als 9,5 mm, zu weniger als 10000 ppmw im Kunststoffbeutel enthalten sind.

Polykristallines Silicium, das in Form von Bruchstücken vorliegt und in Kunststoffbeutel mit mindestens 5 kg Einwaage verpackt ist, beinhaltend zu mindestens 90 Gew.-% Bruchstücke einer Größe von 4 bis 15 mm, gekennzeichnet dadurch, dass Partikel von polykristallinem Silicium mit einer Größe von weniger als 3,5 mm, vorzugsweise mit einer Größe von weniger als 3,9 mm, zu weniger als 10000 ppmw im Kunststoffbeutel enthalten sind.

Polykristallines Silicium, das in Form von Bruchstücken vorliegt und in Kunststoffbeutel mit mindestens 5kg Einwaage verpackt ist, beinhaltend zu mindestens 90 Gew.-% Bruchstücke einer Größe von 1 bis 5 mm, gekennzeichnet dadurch, dass Partikel von polykristallinem Silicium mit einer Größe von weniger als 1 mm zu weniger als 10000 ppmw im Kunststoffbeutel enthalten sind.

Die Bestimmung des Feinanteils von Bruchgrößen <=BG2 erfolgt durch ein handelsübliches Partikelgrößenmeßgerät z.b. einen Camsizer® der Fa. Retsch. Als Messwert für den Feinanteil wurde das 1% Gew. Quantil (=10000 ppmw) herangezogen.

Die Aufgabe der Erfindung wird gelöst durch ein Verfahren zur Herstellung des polykristallinen Siliciums, umfassend folgende Schritte: a) Zerkleinern von mittels CVD abgeschiedenen polykristallinen Siliciumstäben in Bruchstücke; b) Sortieren und Klassifizieren von polykristallinen Siliciumbruchstücken in Größenklassen von 20 bis maximal 200 mm, 45 bis maximal 200 mm, 90 bis maximal 200 mm, 10 bis 40 mm, 4 bis 15 mm oder 1 bis 5 mm; c) Dosierung von polykristallinen Siliciumbruchstücken mittels einer Dosiereinheit; d) Verpackung von auf eine Einwaage von wenigstens 5 kg dosierten polykristallinen Siliciumbruchstücke mittels einer Verpackungseinheit durch Befüllen in wenigstens einen Kunststoffbeutel; wobei Dosiereinheit und Verpackungseinheit Elemente umfassen, die während des Dosierens und während des Verpackens ein Abtrennen von Feinanteil, nämlich ein Anteil aller Bruchstücke oder Partikel aus Silicium, die eine solche Größe aufweisen, dass sie sich mittels eines Maschensiebs mit quadratischen Maschen einer Größe von 8mm x 8mm abtrennen lassen, oder von Partikeln einer Größe von weniger als 8,3 mm oder von Partikeln einer Größe von weniger als 3,5 mm oder von Partikeln einer Größe von weniger als 1 mm erlauben, wobei die Dosiereinheit zu diesem Zweck eine Feinanteilrutsche umfasst, und wobei die Verpackungseinheit einen Energieabsorber oder einen Vorratsbehälter umfasst, der ein Gleiten oder Rutschen der Siliciumbruchstücke in den Kunststoffbeutel ermöglicht, wobei bei der Verwendung eines Energieabsorbers der Kunststoffbeutel über diesen gezogen und der Kunststoffbeutel während des Befüllens mit Siliciumbruchstücken nach unten abgesenkt wird, so dass Silicium in den Kunststoffbeutel rutscht, und wobei nach dem Befüllen des Kunststoffbeutels innerhalb des Beutels eine Gasströmung erzeugt wird, durch die Feinanteil, Staub oder Partikel einer Größe von weniger als 1 mm oder Staub oder Partikel einer Größe von weniger als 3,5 mm oder Staub oder Partikel einer Größe von weniger als 8,3 mm, aus dem Beutel transportiert werden, die anschließend mit einer Absaugvorrichtung abgesaugt werden; so dass nach Befüllen des Verpackungsbeutels folgende Feinanteile oder Partikel in einem Verpackungsbeutel enthalten sind: Größenklasse 20 bis 200 mm: Feinanteil kleiner als 900 ppmw; Größenklasse 45 bis 200 mm: Feinanteil kleiner als 600 ppmw; Größenklasse 90 bis 200 mm: Feinanteil kleiner als 500 ppmw, Größenklasse 10 bis 40 mm: Partikel einer Größe von weniger als 8,3 mm zu weniger als 10000 ppmw; Größenklasse 4 bis 15 mm: Partikel einer Größe von weniger als 3,5 mm zu weniger als 10000 ppmw; Größenklasse 1 bis 5 mm: Partikel einer Größe von weniger als 1 mm zu weniger als 10000 ppmw.

Die Erfindung geht aus von Siliciumbruchstücken von bestimmten Größenklassen, die durch Zerkleinern eines mittels des Siemensprozess abgeschiedenen Stabs und nachfolgendem Sortieren und Klassifizieren erzeugt wurde.

Die Größenklasse ist als längste Entfernung zweier Punkte auf der Oberfläche eines Siliciumbruchstücks (=max. Länge) definiert:

| | |
|---|---|
| Bruchgröße 0 [mm] | 1 bis 5 |
| Bruchgröße 1 [mm] | 4 bis 15 |
| Bruchgröße 2 [mm] | 10 bis 40 |

Neben den zuvor erwähnten Größenklassen ist die Klassifizierung und Sortierung von polykristallinem Silicium in folgende Bruchgrößen ebenfalls üblich:

| | |
|---|---|
| Bruchgröße 3 [mm] | 20 bis 60 |
| Bruchgröße 4 [mm] | 45 bis 120 |
| Bruchgröße 5 [mm] | 90 bis 200 |

Dabei liegen jeweils mindestens 90 Gew.-% der Bruchfraktion innerhalb der genannten Größenbereiche.

Nach Sortieren und Klassifizieren wurden die Bruchstücke verpackt. Sie können zuvor einem Reinigungsverfahren unterzogen worden sein. Alternativ können die Bruchstücke entstaubt sein.

Bevorzugt ist es, die Siliciumbruchstücke - wie in US 2010/0052297 A1 beschrieben - zu entstauben und keiner nasschemischen Reinigung zu unterziehen. Vorzugsweise erfolgt das Entstauben mittels Druckluft oder Trockeneis. Dadurch lässt sich Siliciumstaub von den Bruchstücken entfernen.
Die Behandlung der Bruchstücke mit Druckluft oder Trockeneis sollte bei einem Druck von 1 bis 50 bar erfolgen.
Die Behandlung der Bruchstücke sollte durch Anblasen mit Druckluft oder Trockeneis mit einer Strömungsgeschwindigkeit von wenigstens 2 m/s erfolgen. Die Behandlung der Bruchstücke mit Druckluft oder Trockeneis sollten für 0,01 bis 2000 Sekunden erfolgt.

Vor dem Verpacken wird das polykristalline Silicium zunächst portioniert und gewogen.

Die Polysiliciumbruchstücke werden über eine Förderrinne transportiert und mittels wenigstens eines Siebs in grobe und feine Bruchstücke getrennt. Sie werden mittels einer Dosierwaage abgewogen und auf ein Zielgewicht dosiert, daraufhin über eine Abführrinne abgeführt und zu einer Verpackungseinheit transportiert.

Beim Sieb kann es sich um eine Lochplatte, ein Stangensieb, eine optopneumatische Sortierung oder eine andere geeignete Vorrichtung handeln.

Die Befülleinheit ist so gestaltet, dass feinste Partikel und Absplitterungen des Polysiliciums vor oder während des Befüllens entfernt werden. Je nach Bruchgröße können unterschiedliche Siebe zum Einsatz kommen. Für Bruchgrößen von 20 bis 200 mm werden Siebe mit einer Siebweite von 8 mm eingesetzt. Dadurch lässt sich Feinanteil absieben.

Für kleinere Bruchgrößen von 1 bis 40 mm kommen vorzugsweise Siebe mit kleineren Siebweiten von kleiner als 7 mm, vorzugsweise von 1 bis 4 mm, zum Einsatz. Dadurch lassen sich Partikel einer Größe von weniger als 8,3 mm, vorzugsweise weniger als 9,5 mm, oder Partikel einer Größe von weniger als 3,5 mm, vorzugsweise weniger als 3,9 mm, oder Partikel einer Größe von weniger als 1 mm abtrennen.

Vorzugsweise umfassen das wenigstens eine Sieb und die Dosierwaage an ihren Oberflächen wenigstens teilweise einen kontaminationsarmen Werkstoff wie z.B. ein Hartmetall. Unter Hartmetallen versteht man gesinterte Carbidhartmetalle. Es gibt neben den konventionellen Hartmetallen auf Wolframcarbid-Basis auch Hartmetalle, die vorzugsweise Titancarbid und Titannitrid als Hartstoffe beinhalten, wobei die Bindephase dabei Nickel, Kobalt und Molybdän umfasst.

Vorzugsweise umfassen zumindest die mechanisch beanspruchten, verschleißempfindlichen Oberflächenbereiche von Sieb und Dosierwaage Hartmetall oder Keramik/Carbide. Vorzugsweise ist wenigstens ein Sieb komplett aus Hartmetall gefertigt.

Sieb und Dosierwaage können teilweise oder vollflächig mit einer Beschichtung versehen sein. Als Beschichtung wird vorzugsweise ein Material, ausgewählt aus der Gruppe bestehend aus Titannitrid, Titancarbid, Aluminiumtitannitrid und DLC (Diamond Like Carbon), verwendet.

Die Portionierung und Einwaage des Polysiliciumbruchs erfolgt mittels einer Dosiereinheit, umfassend eine Förderrinne, geeignet zum Befördern eines Produktstroms an Bruchstücken, wenigstens ein Sieb, geeignet zur Trennung des Produktstroms in grobe und feine Bruchstücke, eine Grobdosierrinne für grobe Bruchstücke und eine Feindosierrinne für feine Bruchstücke, eine Dosierwaage zur Bestimmung des Dosiergewichts, wobei das wenigstens eine Sieb sowie die Dosierwaage an ihren Oberflächen wenigstens teilweise ein Hartmetall umfassen.

Eine solche Dosiereinheit dient dazu, Polysiliciumbruchstücke einer bestimmten Größenklasse vor dem Verpacken so exakt wie möglich zu dosieren.

Durch Trennung des Produktstroms in Grob- und Feinteile ist ein exakteres Dosieren des Polysiliciums möglich.

Vorzugsweise umfasst die Dosiereinheit zwei Siebe, besonders bevorzugt Stangensiebe.

Grobe bzw. größere Polysiliciumbruchstücke werden in einer Grobdosierrinne transportiert.

Feine bzw. kleinere Polysiliciumbruchstücke werden in einer Feindosierrinne transportiert.

Die Größenverteilung der Polysiliciumbruchstücke im Ausgangsproduktstrom hängt u.a. vom vorangegangen Zerkleinerungsprozessen ab. Die Art der Aufteilung in grobe und feine Bruchstücke sowie die Größe der groben bzw. feinen Bruchstücke hängen vom gewünschten Endprodukt ab, das zu dosieren und zu verpacken ist.

Eine typische Bruchgrößenverteilung umfasst Bruchstücke der Größen 20 bis maximal 200 mm.

Beispielsweise können Bruchstücke unterhalb einer bestimmten Größe mittels eines Siebs, bevorzugt mittels eines Stangensiebs, in Verbindung mit einer Abführrinne aus der Dosiereinheit abgeführt werden. So lässt es sich bewerkstelligen, dass nur Bruchstücke einer ganz bestimmten Größenklasse dosiert werden.

Durch den Transport des Polysiliciums auf den Förderinnen entstehen erneut unerwünschte Produktgrößen. Diese können beispielsweise durch einen Abtrennen in der Dosierwaage wieder entfernt werden. Dazu ist die Waage mit einer Öffnung, einem wechselbaren Abtrennmechanismus und einer Abführeinheit ausgestattet.

Die abgeführten kleineren Bruchstücke werden in nachgelagerten Prozessen erneut klassifiziert, dosiert und verpackt oder einer anderen Verwendung zugeführt.

Wesentlich ist, dass die Dosiereinheit eine Feinanteilrutsche umfasst. Diese kann einschwenkbar gestaltet sein. Je nach gewünschtem Zielprodukt (Bruchgrößenverteilung) wird diese verwendet, um Feinanteile auszusieben und vom Produktstrom für die Feindosierung abzutrennen.

Die Dosierung des Polysiliciums über die beiden Dosierrinnen lässt sich automatisieren.

Die Dosiereinheit ermöglicht es weiterhin, über eine geregelte Schwenkrinne den Silicium-Produktstrom auf mehrere Dosier- und Verpackungssysteme aufzuteilen und somit eine Kombination mehrerer Dosiersysteme, die mit einem Ausgangsprodukt befüllt werden und nach Dosieren und Wägen zu unterschiedlichen Verpackungsmaschinen transportiert werden.

Das Dosiersystem beinhaltet Abtrennungsmechanismen (Siebe), die unerwünschte, kleinere, Produktgrößen absieben und diese dann den vorgelagerten Prozessen (Sieben, Klassifizieren) zuführen.

Nach Dosierung werden die Bruchstücke über eine Abführrinne abgeführt und zu einer Verpackungseinheit transportiert.

Die Verpackungseinheit umfasst eine Abfüllvorrichtung, mittels derer die Bruchstücke in einen Kunststoffbeutel gefüllt werden.

Die Abfüllvorrichtung beinhaltet vorzugsweise einen frei hängenden Energieabsorber aus einem nichtmetallischen kontaminationsarmen Werkstoff. Der Kunststoffbeutel wird dabei über den Energieabsorber gezogen. Dazu eignet sich beispielsweise ein Knickarmroboter. Das polykristalline Silicium wird eingefüllt, wobei der Kunststoffbeutel während des Befüllens nach unten abgesenkt wird, so dass Silicium in den Kunststoffbeutel rutscht. Durch das Vorhandensein des Energieabsorbers wird ein Durchstoßen des Kunststoffbeutels verhindert, da dieser durch den Energieabsorber vor hartem Aufprallen des Siliciums geschützt wird. Gleichzeitig wird durch das Absenken des Kunststoffbeutels sichergestellt, dass keine Verklemmungen im Energieabsorber auftreten. Das Absenken des Kunststoffbeutels erfolgt vorzugsweise mittels geeigneter Greifersysteme.

Aus US2010/154357 A1 ist bereits bekannt, einen Energieabsorber einzusetzen. Allerdings hat sich gezeigt, dass mit dem dort beschriebenen Verfahren, ein nachzerkleinerungsarmes Befüllen des Kunststoffbeutels nicht möglich ist. Das Absenken des Kunststoffbeutels ist für das Gelingen der Erfindung wesentlich.

Der Energieabsorber hat vorzugsweise die Form eines Trichters oder Hohlkörpers, z.B. eines beweglichen flexiblen Schlauchs.

Er besteht vorzugsweise aus Textil-Material (z. B. Gore-Tex^{®}-PTFE-Gewebe oder Polyester/Polyamid-Gewebe), Kunststoffen (z. B. PE, PP, PA, oder Copolymeren dieser Kunststoffe). Besonders bevorzugt besteht er aus einem gummielastischen Kunststoff, z. B. PU, Kautschuk, Gummi oder Ethylenvinylacetat (EVA), mit einer Shore A-Härte zwischen 30 A und 120 A, bevorzugt 70 A.

Falls kein Energieabsorber zum Einsatz kommt, kann ein Vorratsbehälter vorgesehen sein, der eine Öffnung aufweist, durch die Silicium eingefüllt wird, wobei ein Kunststoffbeutel nach dem Befüllen des Vorratsbehälters mit Silicium über den Vorratsbehälter gezogen wird und der Vorratsbehälter anschließend gedreht wird, so dass das Silicium aus dem Vorratsbehälter in den Kunststoffbeutel rutscht.

Hier wird zunächst ein Vorratsbehälter mit Silicium gefüllt. Zu diesem Zweck weist der Vorratsbehälter zumindest eine Öffnung auf, durch die das Silicium eingefüllt wird. Nach dem Befüllen des Vorratsbehälters wird ein Kunststoffbeutel über die Seite des Vorratsbehälters gezogen, die die Öffnung aufweist, durch die Silicium eingefüllt wurde. Anschließend wird der Vorratsbehälter mitsamt dem Kunststoffbeutel so gedreht, dass das Silicium aus dem Vorratsbehälter in den Kunststoffbeutel rutscht. Dazu wird der Vorratsbehälter beispielsweise nach oben weg gezogen. Auch hier können Durchstoßungen des Kunststoffbeutels sicher vermieden werden, da die Fallstrecke des Siliciums, um vom Vorratsbehälter in den Kunststoffbeutel zu gelangen, praktisch zu vernachlässigen ist.

Ebenso ist es möglich, einen Vorratsbehälter zu verwenden, der wenigstens zwei Öffnungen aufweist, wobei über eine Seite des Vorratsbehälters, die eine der wenigstens zwei Öffnungen umfasst, ein Kunststoffbeutel gezogen wird, durch die zweite der wenigstens zwei Öffnungen Silicium in den Vorratsbehälter eingefüllt wird, wobei der Vorratsbehälter wenigstens zu Beginn des Befüllvorgangs derart angeordnet ist, dass das Silicium beim Befüllen zunächst nicht mit dem Kunststoffbeutel in Kontakt kommt, sondern erst durch ein Absenken des Kunststoffbeutels erreicht wird, dass das Silicium in den Kunststoffbeutel rutscht.

Hier wird der Kunststoffbeutel bereits zu Beginn des Befüllvorgangs über den Vorratsbehälter gezogen. Der Vorratsbehälter weist in diesem Fall zumindest zwei Öffnungen auf. Durch eine Öffnung wird Silicium eingefüllt. Durch die zweite Öffnung kann Silicium in den Kunststoffbeutel gleiten. Vorratsbehälter und Kunststoffbeutel sind so angeordnet, beispielsweise so geneigt, dass in den Vorratsbehälter eingefülltes Silicium in keinem Fall sofort den Kunststoffbeutel trifft bzw. mit diesem in Kontakt kommt. Das Silicium kommt zunächst mit einer Innenwand des Vorratsbehälters in Kontakt. Dabei verliert es Bewegungsenergie und gleitet langsam durch die zweite Öffnung in den Kunststoffbeutel. Der Vorratsbehälter dient damit ebenfalls als eine Art Energieabsorber.

Vorzugweise umfassen der Vorratsbehälter bzw. der Energieabsorber eine Waage.

Diese Waage besteht vorzugsweise aus einem Hartmetall oder Keramik oder Carbiden.

Der vorzugsweise vorgefertigte Beutel wird über den Wägebehälter gezogen und durch Drehen der ganzen Einheit befüllt.

Die Waage ist vorzugsweise als Sieb ausgeführt und befindet sich an einem Boden des Energieabsorbers bzw. des Vorratsbehälters.

Vorzugsweise ist ein Rüttelmechanismus vorgesehen, um Verklemmen gänzlich ausschließen zu können und um eine bessere Abtrennung zu bewerkstelligen. Ein solcher Rüttelmechanismus kann beispielsweise durch Ultraschall erzeugt werden. Eine weitere bevorzugte Ausführungsform sieht eine Waage mit Übergabe an einen Energieabsorber vor.

Dabei wird der Kunststoffbeutel über den Energieabsorber gezogen, anschließend die Waage inkl. Sieb geöffnet, daraufhin eine Fallbremse geöffnet und geschlossen und dann der Beutel unter Wellenbewegungen und/oder Rütteln abgesenkt.

Als Fallbremse dient vorzugsweise eine Vorrichtung, die gegen Kunststoffbeutel bzw. Energieabsorber gedrückt wird.
Dadurch wird der Querschnitt des Kunststoffbeutels bzw. des Energieabsorbers zunächst reduziert, dann kontrolliert freigegeben.

Damit lässt sich der Produktstrom kontrollieren und ein Einfüllen des Siliciums in den vorgefertigten Beutel erreicht, bei dem nur wenig Feinanteil erzeugt wird.

Nach dem Befüllvorgang wird der Kunststoffbeutel verschlossen.

Zuvor wird jedoch innerhalb des Kunststoffbeutels eine Gasströmung erzeugt. Zu diesem Zweck kann beispielsweise Druckluft in den Kunststoffbeutel eingeleitet werden. Der Druck des für das Ausblasen eingeleiteten Gases liegt zwischen 1-10 bar, bevorzugt bei 5 bar. Das Einleiten der Druckluft kann über ein Blasrohr oder eine andere geeignete Vorrichtung erfolgen. Vorzugsweise wird eine gefilterte Luft eingeleitet, um eine Kontamination des Siliciums auszuschließen.

Das Gas oder die Luft soll dabei ungehindert an den großen Bruchstücken vorbeiströmen. Vorzugsweise wird es so eingeleitet, dass es über eine erste Beutelflanke, den Beutelboden und eine zweite Beutelflanke eine halbkreisförmige Bahn beschreibt. Mit dem Gas- oder Luftstrom werden Staub und kleine Partikel aus dem Beutel transportiert. Außerhalb des Beutels, vorzugsweise unmittelbar oberhalb des Beutelrands werden Gas- oder Luftstrom enthaltend Staub und Partikel mittels einer Absaugvorrichtung abgesaugt. Je nach Bruchgrößenklassen kann die Beutelöffnung variiert werden, um so den Ausblasspalt in geeigneter Weise einzustellen.

Dadurch werden Feinanteil oder Staub oder Partikel einer Größe von weniger als 1 mm oder Staub oder Partikel einer Größe von weniger als 3,5 mm, vorzugsweise weniger als 3,9 mm, oder Staub oder Partikel einer Größe von weniger als 8,3 mm, vorzugsweise weniger als 9,5 mm, aus dem Beutel transportiert.

Der Kunststoffbeutel besteht vorzugsweise aus einem hochreinen Kunststoff. Dabei handelt es sich bevorzugt um Polyethylen (PE), Polyethylenterephthalat (PET) oder Polypropylen (PP) oder um Verbundfolien.

Eine Verbundfolie ist eine mehrschichtige Verpackungsfolie, aus der flexible Verpackungen gemacht werden. Die einzelnen Folienschichten werden üblicherweise extrudiert oder kaschiert bzw. laminiert. Die Verpackungen finden hauptsächlich in der Lebensmittelindustrie Verwendung.

Vorzugsweise wird der Kunststoffbeutel während des Befüllens mit Polysiliciumbruch mittels mindestens zweier Elemente am Beutel gehalten und nach unten vom Energieabsorber weg bewegt und nach Beendigung des Befüllvorganges mittels dieser Greifer einer Verschlussvorrichtung, vorzugsweise einer Verschweißvorrichtung, zugeführt.

Der Kunststoffbeutel weist vorzugsweise eine Dicke von 10 bis 1000 µm auf. Das Verschließen des Kunststoffbeutels kann beispielsweise mittels Verschweißen, Verkleben, Vernähen oder Formschluss erfolgen. Vorzugsweise erfolgt es mittels Verschweißen.

Um sicherzustellen, dass es im verschweißten Kunststoffbeutel enthaltend Polysilicium beim Transport zum Kunden nicht erneut zu Nachzerkleinerung und zum Entstehen von Feinanteil kommt, ist eine weitere stabilisierende Verpackung der Kunststoffbeutel bevorzugt.

Der Kunststoffbeutel wird für Transportzwecke in einen Transportbehälter, z.B. eine Großverpackung, umfassend Trennelemente oder Kartons eingebracht. Als besonders vorteilhaft hat es sich erwiesen, Kartons vorzusehen, die den Abmessungen des Kunststoffbeutels enthaltend Polysilicium angepasst sind. Zudem sollte der Kunststoffbeutel von einer Folie mit einer Verstärkungsstruktur oder von einem formbildenden Element umgeben sein. Um die Verpackung zu stabilisieren, kann es von Vorteil sein, keilförmige Elemente vorzusehen, die sich an die Oberseite und/oder an eine Seitenwand des Kartons und an den Kunststoffbeutel enthaltend polykristallines Silicium anschmiegen. Mit diesen Maßnahmen ist es möglich, beim Transport zum Kunden eine Fixierung der Bruchstücke zu gewährleisten, so dass das Entstehen von neuem oder zusätzlichem Feinanteil im Kunststoffbeutel vermieden werden kann.

### Beispiel

Erfindungsgemäß verpackte Beutel und als Vergleichsbeispiele mittels des Verfahrens nach US 7013620 B2 sowie händisch verpackte Beutel wurden untersucht. Es wurden jeweils Beutel mit Einwaagen von 5 kg und 10 kg mit unterschiedlichen Größenklassen der Bruchgrößen BG0 bis BG 5 untersucht.

Zur Bestimmung des Feinanteils der Bruchgrößen 3 bis 5 wurde ein Maschensieb, mit 8x8 mm quadratischen Maschen, und Vibrationsmotoren verwendet. Der dabei abgesiebte Feinanteil wurde gravimetrisch quantifiziert (Nachweisgenauigkeit 10 ppmw).

Zur Bestimmung des Feinanteils in den Bruchgrößenklassen 0 bis 2 wurde ein handelsübliches Partikelmessgerät verwendet. Beispielsweise eignet sich der Camsizer^{®} der Fa. RETSCH Technology GmbH. Dabei werden über Kamerasysteme die Partikel einzeln charakterisiert. Als Maßeinheit für den Anteil feiner Partikel wird hier das 1%-(Gewichts-)Quantil verwendet.

**Tabelle 1** zeigt die Ergebnisse für Bruchgrößen 0 bis 2.
Für Bruchgröße 0 ergibt sich ein Mittelwert von 1,2106 mm. Dies bedeutet, dass 1 Gew.-% des Beutelinhalts (Bruchstücke und kleinere Partikel) eine Partikelgröße von kleiner oder gleich 1,21 mm aufweist. Anders ausgedrückt heißt dies, dass Partikel einer Größe von weniger als 1 mm maximal 1 Gew.-% des Beutelinhalts ausmachen, also weniger als 1 Gew.-% des Beutelinhalts außerhalb des Bruchgrößenbereichs von 1 bis 5 mm liegen.

Im Vergleich zum Stand der Technik bedeutet diese eine deutliche Verbesserung. Sowohl Verpackung gemäß US 7013620 B2 als auch händische Verpackung führen zu einem Anteil an unerwünschten Partikeln von mehr als 1 Gew.-%.

**Tabelle 1**

| Bruchgröße | Verpackung gemäß US 7013620 B2 | Händische Verpackung | Erfindung |
|---|---|---|---|
| | 1% Quantil [mm] | 1% Quantil [mm] | 1% Quantil [mm] |
| BG0 | 0,896 | 0,985 | 1,267 |
| BG0 | 0,975 | 0,978 | 1,171 |
| BG0 | 0,894 | 0,93 | 1,237 |
| BG0 | 0,873 | 0,857 | 1,256 |
| BG0 | 0,934 | 0,987 | 1,122 |
| Mittelwert | 0,9144 | 0,9474 | 1,2106 |
| BG1 | 2,88 | 3,005 | 3,568 |
| BG1 | 2,704 | 2,864 | 3,765 |
| BG1 | 2,941 | 2,989 | 3,688 |
| BG1 | 3,062 | 3,045 | 3,96 |
| BG1 | 2,835 | 2,899 | 3,428 |
| Mittelwert | 2,8844 | 2,9604 | 3,6818 |
| BG2 | 5,572 | 6,254 | 9,044 |
| BG2 | 5,921 | 7,021 | 9,448 |
| BG2 | 5,556 | 6,54 | 8,282 |
| BG2 | 5,78 | 7,131 | 9,59 |
| BG2 | 6,217 | 6,125 | 8,821 |
| Mittelwert | 5,8092 | 6,6142 | 9,037 |

**Tabelle 2** zeigt die Ergebnisse für Bruchgrößen 3 bis 5. Auch hier führt die Erfindung zu deutlichen Verbesserungen gegenüber der händischen Verpackung.

Bei Bruchgröße 4 entsteht nach Verpackung gemäß US 7013620 B2 ein Feinanteil zwischen 6400 u. 3700 ppmw, im Mittel ergeben sich 5280 ppmw.

Wird hingegen die Bruchgröße 4 manuell verpackt, so kann eine signifikante Reduktion des Feinanteils beobachtet werden. Es wurden Werte zwischen 1100 u. 1900 ppmw gemessen, im Mittel 1460 ppmw.

Beim Vorgehen gemäß Erfindung wurden Werte zwischen 0 u. 900 ppmw, im Mittel 340 ppmw ermittelt. Ein Wert lag unter der Nachweisgrenze von 10 ppmw.

**Tabelle 2**

| Bruchgröße | Verpackung gemäß US 7013620 B2 | Händische Verpackung | Erfindung |
|---|---|---|---|
| | 8mm Sieb [ppmw] | 8mm Sieb [ppmw] | 8mm Sieb [ppmw] |
| BG3 | 22300 | 1700 | 600 |
| BG3 | 16500 | 1600 | 300 |
| BG3 | 17500 | 1600 | 800 |
| BG3 | 17500 | 1400 | 900 |
| BG3 | 20400 | 2050 | 700 |
| Mittelwert | 18840 | 1670 | 660 |
| BG4 | 3700 | 1300 | 500 |
| BG4 | 5200 | 1900 | 600 |
| BG4 | 6400 | 1700 | 400 |
| BG4 | 6300 | 1100 | 200 |
| BG4 | 4800 | 1300 | < 10 |
| Mittelwert | 5280 | 1460 | 340 |
| BG5 | 4800 | 1520 | 500 |
| BG5 | 3700 | 1290 | 200 |
| BG5 | 5000 | 1130 | < 10 |
| BG5 | 3200 | 1420 | 300 |
| BG5 | 2900 | 1390 | 100 |
| Mittelwert | 3920 | 1350 | 220 |

## Patentansprüche

1. Polykristallines Silicium, das in Form von Bruchstücken vorliegt und in Kunststoffbeutel mit mindestens 5 kg Einwaage verpackt ist, beinhaltend Bruchstücke einer Größe von 20 bis 200 mm, **dadurch gekennzeichnet dass** ein Feinanteil, nämlich ein Anteil aller Bruchstücke oder Partikel aus Silicium, die eine solche Größe aufweisen, dass sie sich mittels eines Maschensiebs mit quadratischen Maschen einer Größe von 8mm x 8mm abtrennen lassen, im Kunststoffbeutel kleiner als 900 ppmw, bevorzugt kleiner als 300 ppmw, besonders bevorzugt kleiner als 10 ppmw beträgt.

2. Polykristallines Silicium nach Anspruch 1, beinhaltend Bruchstücke einer Größe von 45 bis 200 mm, **dadurch gekennzeichnet, dass** der Feinanteil im Kunststoffbeutel kleiner als 600 ppmw, bevorzugt kleiner als 10 ppmw beträgt.

3. Polykristallines Silicium nach Anspruch 2, beinhaltend Bruchstücke einer Größe von 90 bis 200 mm, **dadurch gekennzeichnet, dass** der Feinanteil im Kunststoffbeutel kleiner als 500 ppmw, bevorzugt kleiner als 10 ppmw beträgt.

4. Polykristallines Silicium, das in Form von Bruchstücken vorliegt und in Kunststoffbeutel mit mindestens 5 kg Einwaage verpackt ist, beinhaltend zu mindestens 90 Gew.-% Bruchstücke einer Größe von 10 bis 40 mm, **gekennzeichnet dadurch, dass** Partikel einer Größe von weniger als 8,3 mm, vorzugsweise einer Größe von weniger als 9,5 mm, zu weniger als 10000 ppmw im Kunststoffbeutel enthalten sind.

5. Polykristallines Silicium, das in Form von Bruchstücken vorliegt und in Kunststoffbeutel mit mindestens 5 kg Einwaage verpackt ist, beinhaltend zu mindestens 90 Gew.-% Bruchstücke einer Größe von 4 bis 15 mm, **gekennzeichnet dadurch, dass** Partikel einer Größe von weniger als 3,4 mm, vorzugsweise einer Größe von weniger als 3,9 mm, zu weniger als 10000 ppmw im Kunststoffbeutel enthalten sind.

6. Polykristallines Silicium, das in Form von Bruchstücken vorliegt und in Kunststoffbeutel mit mindestens 5kg Einwaage verpackt ist, beinhaltend zu mindestens 90 Gew.-% Bruchstücke einer Größe von 1 bis 5 mm, **gekennzeichnet dadurch, dass** Partikel einer Größe von weniger als 1 mm zu weniger als 10000 ppmw im Kunststoffbeutel enthalten sind.

7. Verfahren zur Herstellung des polykristallinen Siliciums nach den Ansprüchen 1 bis 6, umfassend folgende Schritte:
a) Zerkleinern von mittels CVD abgeschiedenen polykristallinen Siliciumstäben in Bruchstücke; b) Sortieren und Klassifizieren von polykristallinen Siliciumbruchstücken in Größenklassen von 20 bis maximal 200 mm, 45 bis maximal 200 mm, 90 bis maximal 200 mm, 10 bis 40 mm, 4 bis 15 mm oder 1 bis 5 mm; c) Dosierung von polykristallinen Siliciumbruchstücken mittels einer Dosiereinheit; d) Verpackung von auf eine Einwaage von wenigstens 5 kg dosierten polykristallinen Siliciumbruchstücke mittels einer Verpackungseinheit durch Befüllen in wenigstens einen Kunststoffbeutel; wobei Dosiereinheit und Verpackungseinheit Elemente umfassen, die während des Dosierens und während des Verpackens ein Abtrennen von Feinanteil, nämlich von Bruchstücken oder Partikeln aus Silicium, die eine solche Größe aufweisen, dass sie sich mittels eines Maschensiebs mit quadratischen Maschen einer Größe von 8mm x 8mm abtrennen lassen, oder von Partikeln einer Größe von weniger als 8,3 mm, vorzugsweise einer Größe von weniger als 9,5 mm, oder von Partikeln einer Größe von weniger als 3,5 mm, vorzugsweise einer Größe von weniger als 3,9 mm, oder von Partikeln einer Größe von weniger als 1 mm erlauben, wobei die Dosiereinheit zu diesem Zweck eine Feinanteilrutsche umfasst, und wobei die Verpackungseinheit einen Energieabsorber oder einen Vorratsbehälter umfasst, der ein Gleiten oder Rutschen der Siliciumbruchstücke in den Kunststoffbeutel ermöglicht, wobei bei der Verwendung eines Energieabsorbers der Kunststoffbeutel über diesen gezogen und der Kunststoffbeutel während des Befüllens mit Siliciumbruchstücken nach unten abgesenkt wird, so dass Silicium in den Kunststoffbeutel rutscht, und wobei nach dem Befüllen des Kunststoffbeutels innerhalb des Beutels eine Gasströmung erzeugt wird, durch die Feinanteil, oder Staub oder Partikel einer Größe von weniger als 1 mm oder Staub oder Partikel einer Größe von weniger als 3,5 mm, vorzugsweise einer Größe von weniger als 3,9 mm, oder Staub oder Partikel einer Größe von weniger als 8,3 mm, vorzugsweise einer Größe von weniger als 9,5 mm, aus dem Beutel transportiert werden, die anschließend mit einer Absaugvorrichtung abgesaugt werden; so dass nach Befüllen des Verpackungsbeutels folgende Feinanteile oder Partikel in einem Verpackungsbeutel enthalten sind: Größenklasse 20 bis 200 mm: Feinanteil kleiner als 900 ppmw; Größenklasse 45 bis 200 mm: Feinanteil kleiner als 600 ppmw; Größenklasse 90 bis 200 mm: Feinanteil kleiner als 500 ppmw, Größenklasse 10 bis 40 mm: Partikel einer Größe von weniger als 8,3 mm, vorzugsweise einer Größe von weniger als 9,5 mm, zu weniger als 10000 ppmw; Größenklasse 4 bis 15 mm: Partikel einer Größe von weniger als 3,5 mm, vorzugsweise einer Größe von weniger als 3,9 mm, zu weniger als 10000 ppmw; Größenklasse 1 bis 5 mm: Partikel einer Größe von weniger als 1 mm zu weniger als 10000 ppmw.

## Claims

1. Polycrystalline silicon in the form of chunks packed in plastic bags containing a mass of at least 5 kg, including chunks of size from 20 to 200 mm, **characterized in that** any fines fraction, namely a fraction of all chunks or particles of silicon that have such a size that they can be removed by means of a mesh sieve having square meshes of size 8 mm × 8 mm, in the plastic bag is less than 900 ppmw, preferably less than 300 ppmw, more preferably less than 10 ppmw.

2. Polycrystalline silicon according to Claim 1, including chunks of size from 45 to 200 mm, **characterized in that** the fines fraction in the plastic bag is less than 600 ppmw, preferably less than 10 ppmw.

3. Polycrystalline silicon according to Claim 2, including chunks of size from 90 to 200 mm, **characterized in that** the fines fraction in the plastic bag is less than 500 ppmw, preferably less than 10 ppmw.

4. Polycrystalline silicon in the form of chunks packed in plastic bags containing a mass of at least 5 kg, including at least 90% by weight of chunks of size from 10 to 40 mm, **characterized in that** particles of size less than 8.3 mm, preferably of size less than 9.5 mm, are present to an extent of less than 10 000 ppmw in the plastic bag.

5. Polycrystalline silicon in the form of chunks packed in plastic bags containing a mass of at least 5 kg, including at least 90% by weight of chunks of size 4 to 15 mm, **characterized in that** particles of size less than 3.4 mm, preferably of size less than 3.9 mm, are present to an extent of less than 10 000 ppmw in the plastic bag.

6. Polycrystalline silicon in the form of chunks packed in plastic bags containing a mass of at least 5 kg, including at least 90% by weight of chunks of size 1 to 5 mm, **characterized in that** particles of size less than 1 mm are present to an extent of less than 10 000 ppmw in the plastic bag.

7. Process for producing the polycrystalline silicon according to Claims 1 to 6, comprising the following steps:
a) comminuting polycrystalline silicon rods deposited by means of CVD to chunks; b) sorting and classifying polycrystalline silicon chunks into size classes of 20 to not more than 200 mm, 45 to not more than 200 mm, 90 to not more than 200 mm, 10 to 40 mm, 4 to 15 mm or 1 to 5 mm; c) metering polycrystalline silicon chunks by means of a metering unit; d) packing polycrystalline silicon chunks metered to a mass of at least 5 kg by means of a packing unit, by filling into at least one plastic bag; where metering unit and packing unit comprise elements which allow, during the metering and during the packing, removal of fines, namely of chunks or particles of silicon that have such a size that they can be removed by means of a mesh sieve having square meshes of size 8 mm × 8 mm, or of particles of size less than 8.3 mm, preferably of size less than 9.5 mm, or of particles of size less than 3.5 mm, preferably of size less than 3.9 mm, or of particles of size less than 1 mm, where the metering unit comprises a fines chute for this purpose, and where the packing unit comprises an energy absorber or a reservoir vessel which enables sliding or slipping of the silicon chunks into the plastic bag, where, in the case of the use of an energy absorber, the plastic bag is drawn over the latter and the plastic bag is lowered downward during the filling with silicon chunks such that silicon slides into the plastic bag, and where a gas flow which is generated within the plastic bag after the bag has been filled transports the fines, or dust or particles of size less than 1 mm or dust or particles of size less than 3.5 mm, preferably of size less than 3.9 mm, or dust or particles of size less than 8.3 mm, preferably of size less than 9.5 mm, out of the bag, and these are then sucked out with a suction device, in such a way that, after filling of the packing bag, the following fines or particles are present in a packing bag: size class 20 to 200 mm: fines fraction less than 900 ppmw; size class 45 to 200 mm: fines fraction less than 600 ppmw; size class 90 to 200 mm: fines fraction less than 500 ppmw, size class 10 to 40 mm: particles of size less than 8.3 mm, preferably of size less than 9.5 mm, to an extent of less than 10 000 ppmw; size class 4 to 15 mm: particles of size less than 3.5 mm, preferably of size less than 3.9 mm, to an extent of less than 10 000 ppmw; size class 1 to 5 mm: particles of size less than 1 mm to an extent of less than 10 000 ppmw.

## Revendications

1. Silicium polycristallin, qui se présente sous la forme de fragments et qui est emballé dans un sac en plastique en un poids d'au moins 5 kg, contenant des fragments d'une taille de 20 à 200 mm, **caractérisé en ce qu'**une proportion de fines, à savoir une proportion de tous les fragments ou de toutes les particules de silicium qui présentent une taille telle qu'ils puissent être séparés au moyen d'un tamis à mailles carrées d'une taille de 8 mm x 8 mm, dans le sac en plastique est inférieure à 900 ppm en poids, de préférence inférieure à 300 ppm en poids, de manière particulièrement préférée inférieure à 10 ppm en poids.

2. Silicium polycristallin selon la revendication 1, contenant des fragments d'une taille de 45 à 200 mm, **caractérisé en ce que** la proportion de fines dans le sac en plastique est inférieure à 600 ppm en poids, de préférence inférieure à 10 ppm en poids.

3. Silicium polycristallin selon la revendication 2, contenant des fragments d'une taille de 90 à 200 mm, **caractérisé en ce que** la proportion de fines dans le sac en plastique est inférieure à 500 ppm en poids, de préférence inférieure à 10 ppm en poids.

4. Silicium polycristallin, qui se présente sous la forme de fragments et qui est emballé dans un sac en plastique en un poids d'au moins 5 kg, contenant au moins 90 % en poids de fragments d'une taille de 10 à 40 mm, **caractérisé en ce que** des particules d'une taille inférieure à 8,3 mm, de préférence d'une taille inférieure à 9,5 mm, sont contenues à hauteur de moins de 10 000 ppm en poids dans le sac en plastique.

5. Silicium polycristallin, qui se présente sous la forme de fragments et qui est emballé dans un sac en plastique en un poids d'au moins 5 kg, contenant au moins 90 % en poids de fragments d'une taille de 4 à 15 mm, **caractérisé en ce que** des particules d'une taille inférieure à 3,4 mm, de préférence d'une taille inférieure à 3,9 mm, sont contenues à hauteur de moins de 10 000 ppm en poids dans le sac en plastique.

6. Silicium polycristallin, qui se présente sous la forme de fragments et qui est emballé dans un sac en plastique en un poids d'au moins 5 kg, contenant au moins 90 % en poids de fragments d'une taille de 1 à 5 mm, **caractérisé en ce que** des particules d'une taille inférieure 1 mm sont contenues à hauteur de moins de 10 000 ppm en poids dans le sac en plastique.

7. Procédé de fabrication du silicium polycristallin selon les revendications 1 à 6, comprenant les étapes suivantes :
a) le broyage de baguettes de silicium polycristallin déposées par dépôt chimique en phase vapeur en fragments ; b) le tri et la classification des fragments de silicium polycristallin en classes de tailles de 20 à au plus 200 mm ; 45 à au plus 200 mm, 90 à au plus 200 mm, 10 à 40 mm, 4 à 15 mm ou 1 à 5 mm ; c) le dosage des fragments de silicium polycristallin au moyen d'une unité de dosage ; d) l'emballage des fragments de silicium polycristallin dosés à un poids d'au moins 5 kg au moyen d'une unité d'emballage par remplissage d'au moins un sac en plastique ; l'unité de dosage et l'unité d'emballage comprenant des éléments qui permettent pendant le dosage et pendant l'emballage une séparation d'une fraction de fines, à savoir de fragments ou de particules de silicium qui présentent une taille telle qu'ils peuvent être séparés au moyen d'un tamis à mailles carrées d'une taille de 8 mm x 8 mm, ou de particules d'une taille de moins de 8,3 mm, de préférence d'une taille de moins de 9,5 mm, ou de particules d'une taille de moins de 3,5 mm, de préférence d'une taille de moins de 3,9 mm, ou de particules d'une taille de moins de 1 mm, l'unité de dosage comprenant à cette fin une glissière à fraction de fines et l'unité d'emballage comprenant un absorbeur d'énergie ou un contenant de stockage qui permet un glissement ou un déchargement des fragments de silicium dans le sac en plastique ; lors de l'utilisation d'un absorbeur d'énergie, le sac en plastique étant tiré par celui-ci et le sac en plastique étant abaissé vers le bas pendant le remplissage avec les fragments de silicium, de sorte que le silicium glisse dans le sac en plastique, et un courant gazeux étant généré dans le sac après le remplissage du sac en plastique, qui transporte la fraction de fines, ou les poussières ou les particules d'une taille inférieure à 1 mm, ou les poussières ou les particules d'une taille inférieure à 3,5 mm, de préférence d'une taille inférieure à 3,9 mm, ou les poussières ou les particules d'une taille inférieure à 8,3 mm, de préférence d'une taille inférieure à 9,5 mm, hors du sac, qui sont ensuite aspirées par un dispositif d'aspiration ; de sorte qu'après le remplissage du sac d'emballage, les fractions de fines ou les particules suivantes soient contenues dans un sac d'emballage : classe de tailles de 20 à 200 mm : fraction de fines inférieure à 900 ppm en poids ; classe de tailles de 45 à 200 mm : fraction de fines inférieure à 600 ppm en poids ; classe de taille de 90 à 200 mm : fraction de fines inférieure à 500 ppm en poids ; classe de taille de 10 à 40 mm : particules d'une taille inférieure à 8,3 mm, de préférence d'une taille inférieure à 9,5 mm, à hauteur de moins de 10 000 ppm en poids ; classe de tailles de 4 à 15 mm : particules d'une taille inférieure à 3,5 mm, de préférence d'une taille inférieure à 3,9 mm, à hauteur de moins de 10 000 ppm ; classe de tailles de 1 à 5 mm : particules d'une taille inférieure à 1 mm à hauteur de moins de 10 000 ppm en poids.
